# EUROPEAN PATENT APPLICATION

(11) **EP 4 836 364 A1**
(43) Date of publication of application: **04.11.2026**
(21) Application number: 25744756.5
(22) Date of filing: 24.01.2025
(51) Int. Cl.: H04L 27/00

(54) **MOBILITY MANAGEMENT METHOD AND APPARATUS, TERMINAL DEVICE, NETWORK DEVICE, AND STORAGE MEDIUM**

(30) Priority: 24.01.2024 CN 202410101474
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: TANG, Xiaoxuan, Beijing 100053 (CN); LIU, Xiaoman, Beijing 100053 (CN)
(74) Representative: Murgitroyd & Company
(86) International application number: PCT/CN2025/074988
(87) International publication number: WO 2025/157293

(57) **Abstract**

The present disclosure relates to the field of wireless communication technologies, and in particular provides a mobility management method and apparatus, a terminal device, a network device and a storage medium. The method includes: receiving a mobility management message, wherein the mobility management message at least includes measurement configuration information of one or more cells and execution condition information; obtaining measurement information of the one or more cells based at least on the measurement configuration information; and determining, based on the measurement information and the execution condition information, to access one or more target cells among the one or more cells. A cell handover based on mobility management is triggered by a terminal device, thereby reducing handover latency and improving robustness.

## Description

### CROSS-REFERENCE TO RELATED APPLICATION

The present disclosure is based on and claims priority to Chinese Patent Application No. 202410101474.9 filed on January 24, 2024, a disclosure of which is incorporated herein by reference in its entirety.

### TECHNICAL FIELD

The present disclosure relates to the field of mobile communication technologies, and in particular, to a mobility management method and apparatus, a terminal device, a network device and a storage medium.

### BACKGROUND

In the field of mobile communication technologies, a terminal device that is using network services may encounter problems such as interruption of current network services or degradation of service quality due to factors such as mobility requirements, adjustment of wireless transmission traffic load, activation, operation and maintenance, equipment failures, and cell load. In known solutions, a cross-cell mobility mechanism based on Layer 1 (L1)/Layer 2 (L2) signaling has been introduced, that is, handover is completed based on L1/L2 signaling to reduce latency. For example, the terminal device performs L1 measurements on configured reference signals according to configuration from a network side, and reports, to the network side according to reporting configuration, indices of K reference signals of N cells and/or L1-Reference Signal Received Power (L1-RSRP). That is, based on measured signal conditions, the terminal device reports N×K measurement results.

Although the L1/L2 measurement reporting and subsequent MAC CE commands have reduced latency, in the case of an FR2 "millimeter wave" frequency band, channel conditions change more rapidly, and it is necessary to further reduce handover latency and improve robustness of handover.

### SUMMARY

In view of the above problems, the present disclosure provides a mobility management method and apparatus, a terminal device, a network device and a storage medium.

According to a first aspect of the present disclosure, a mobility management method is provided, performed by a terminal device, including: receiving a mobility management message, wherein the mobility management message at least includes measurement configuration information of one or more cells and execution condition information; obtaining measurement information of the one or more cells based at least on the measurement configuration information; and determining, based on the measurement information and the execution condition information, to access one or more target cells among the one or more cells.

In some embodiments, the execution condition information includes at least one of first execution condition information related to layer 1 measurement or second execution condition information related to layer 3 measurement, and the determining, based on the measurement information and the execution condition information, to access the one or more target cells among the one or more cells includes at least one of: determining, based on the measurement information and the first execution condition information, to access the one or more target cells among the one or more cells; or determining, based on the measurement information, the first execution condition information and the second execution condition information, to access the one or more target cells among the one or more cells.

In some embodiments, the determining, based on the measurement information, the first execution condition information and the second execution condition information, to access the one or more target cells among the one or more cells includes at least one of: in response to the measurement information satisfying the first execution condition information and the second execution condition information, determining to access the one or more target cells among the one or more cells; or in response to the measurement information satisfying the second execution condition information, determining whether the measurement information satisfies the first execution condition information, and in response to the measurement information satisfying the first execution condition information, determining to access the one or more target cells among the one or more cells.

In some embodiments, the execution condition information includes a plurality of pieces of execution condition information corresponding to a plurality of cell types, the plurality of cell types includes a primary cell, a primary secondary cell and a secondary cell, and the execution condition information further includes measurement offset information corresponding to the plurality of cell types.

In some embodiments, the method further includes: accessing the one or more target cells based on a type and an index of the one or more target cells.

According to a second aspect of the present disclosure, a mobility management method is provided, performed by a network device, including: sending a mobility management message, wherein the mobility management message at least includes measurement configuration information of one or more cells and execution condition information, wherein the measurement configuration information is used for a terminal device to obtain measurement information of the one or more cells and determine, based on the measurement information and the execution condition information, to access one or more target cells among the one or more cells.

According to a third aspect of the present disclosure, a mobility management apparatus is provided, including: a receiving unit configured to receive a mobility management message, wherein the mobility management message at least includes measurement configuration information of one or more cells and execution condition information; an obtaining unit configured to obtain measurement information of the one or more cells based at least on the measurement configuration information; and a determining unit configured to determine, based on the measurement information and the execution condition information, to access one or more target cells among the one or more cells.

According to a fourth aspect of the present disclosure, a mobility management apparatus is provided, including: a sending unit configured to send a mobility management message, wherein the mobility management message at least includes measurement configuration information of one or more cells and execution condition information, wherein the measurement configuration information is used for a terminal device to obtain measurement information of the one or more cells and determine, based on the measurement information and the execution condition information, to access one or more target cells among the one or more cells.

According to a fifth aspect of the present disclosure, a terminal device is provided, including: a communication interface configured to perform wireless communication with a network device; a memory configured to store computer-readable instructions; and a processor configured to execute the computer-readable instructions, to cause the terminal device to perform the mobility management method according to the first aspect.

According to a sixth aspect of the present disclosure, a network device is provided, including: a communication interface configured to perform wireless communication with a terminal device; a memory configured to store computer-readable instructions; and a processor configured to execute the computer-readable instructions, to cause the network device to perform the mobility management method according to the second aspect.

According to a seventh aspect of the present disclosure, a non-transitory computer-readable storage medium is provided for storing computer-readable instructions, wherein when the computer-readable instructions are executed by a processor, the computer-readable instructions cause the processor to perform the mobility management method according to the first aspect.

According to the technical solutions provided in embodiments of the present disclosure, a cell handover based on mobility management is triggered by a terminal device, thereby reducing handover latency and improving robustness. Without increasing a number of candidate cells, the number of candidate cells of different types is increased, and more accurate cell type matching is achieved without increasing signaling overhead. In addition, for specific cell types and cell events, corresponding measurement offsets are configured, thereby further optimizing selection of a target cell.

It should be understood that both the foregoing general description and the following detailed description are illustrative and are intended to provide further explanation of the claimed technology.

### BRIEF DESCRIPTION OF THE DRAWINGS

The above and other objects, features and advantages of the present disclosure will become more apparent by describing in greater detail embodiments of the present disclosure with reference to the accompanying drawings. The accompanying drawings are used to provide a further understanding of the embodiments of the present disclosure, and constitute a part of the specification, and together with the embodiments of the present disclosure are used to explain the present disclosure, and do not constitute a limitation to the present disclosure. In the drawings, the same reference numerals generally denote the same components or steps.
FIG. 1 is a schematic diagram illustrating a communication system to which a mobility management method according to embodiments of the present disclosure is applied.
FIG. 2 is a flowchart illustrating a mobility management method according to an embodiment of the present disclosure.
FIG. 3 is a flowchart further illustrating a mobility management method according to an embodiment of the present disclosure.
FIG. 4 is a schematic diagram illustrating an overall procedure of a mobility management method according to an embodiment of the present disclosure.
FIG. 5 is a block diagram illustrating a mobility management apparatus according to an embodiment of the present disclosure.
FIG. 6 is a block diagram further illustrating a mobility management apparatus according to an embodiment of the present disclosure.
FIG. 7 is a hardware block diagram illustrating a terminal device according to an embodiment of the present disclosure.
FIG. 8 is a hardware block diagram illustrating a network device according to an embodiment of the present disclosure.
FIG. 9 is a schematic diagram illustrating a computer-readable storage medium according to an embodiment of the present disclosure.

### DETAILED DESCRIPTION

In order to make the objectives, technical solutions, and advantages of the present disclosure more apparent, exemplary embodiments according to the present disclosure will be described in detail below with reference to the accompanying drawings. Obviously, the described embodiments are only part of the embodiments of the present disclosure, rather than all the embodiments of the present disclosure, and it should be understood that the present disclosure is not limited to the exemplary embodiments described herein.

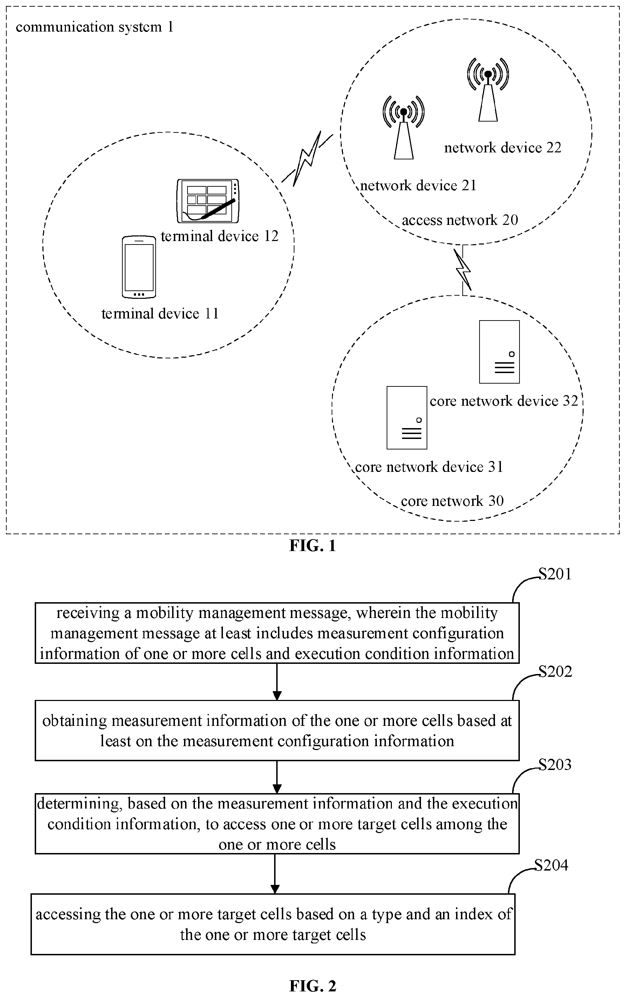

First, a communication system to which a mobility management method according to embodiments of the present disclosure is applied will be described with reference to FIG. 1. The technical solutions in the embodiments of the present application may be applied to various wireless communication systems, for example: a Global System for Mobile Communications (GSM), a Code Division Multiple Access (CDMA) system, a Wideband Code Division Multiple Access (WCDMA) system, a General Packet Radio Service (GPRS), a Long Term Evolution (LTE) system, a Long Term Evolution-Advanced (LTE-A) system, a New Radio (NR) system, an evolved NR system, a Long Term Evolution in unlicensed spectrum (LTE-U) system, a New Radio in unlicensed spectrum (NR-U) system, a Non-Terrestrial Network (NTN) system, a Universal Mobile Telecommunications System (UMTS), a Wireless Local Area Network (WLAN) system, a Wireless Fidelity (WiFi) system, a fifth generation (5G) communication system, or other communication systems. It should be readily understood that the communication system architecture and service scenarios described in the embodiments of the present disclosure are intended to illustrate the technical solutions of the present disclosure more clearly, and do not constitute limitations on the technical solutions provided in the embodiments of the present disclosure. A person skilled in the art may understand that, with evolution of network architectures and emergence of new service scenarios, the technical solutions provided in the embodiments of the present disclosure are also applicable to similar technical problems.

As shown in FIG. 1, the communication system 1 includes three interaction domains: terminal devices (e.g., terminal devices 11, 12), an access network 20 (e.g., including network devices 21, 22), and a core network 30 (e.g., including core network devices 31, 32). By means of the communication system 1, the terminal devices 11 and 12 can perform data communication with an external data network (for example, but not limited to, the Internet).

The terminal devices 11 and 12 may be user equipment (UE), access terminals, user units, user stations, mobile stations, mobile terminals, remote stations, remote terminals, mobile devices, user terminals, smart terminals, wireless communication devices, user agents, or user apparatuses. The terminal devices may also be cellular phones, cordless phones, Session Initiation Protocol (SIP) phones, Wireless Local Loop (WLL) stations, Personal Digital Assistants (PDAs), handheld devices with wireless communication capabilities, computing devices or other processing devices connected to wireless modems, relay devices, in-vehicle devices, wearable devices, terminals in next generation communication systems such as an NR network, or terminals in a future evolved Public Land Mobile Network (PLMN), which are not specifically limited herein.

The network devices 21, 22 may be devices for communicating with the terminal devices 11, 12. The network devices 21, 22 may be a Base Transceiver Station (BTS) in a GSM or CDMA communication system, a NodeB (NB) in a WCDMA communication system, an evolved Node B (eNB or eNodeB) in an LTE communication system, a next generation evolved Node B (ng-eNB) in an NR communication system, or a next generation Node B (gNB) in an NR communication system. In addition, the network devices 21, 22 may also be an Access Point (AP) in a WLAN, a relay station, a network device in a future evolved PLMN network, or a network device in an NTN network, etc. It should be noted that in some network deployments, a network device may be an independent node to implement all functions of the above base station; may include a Centralized Unit (CU) and a Distributed Unit (DU), for example, gNB-CU and gNB-DU, and may also include an Active Antenna Unit (AAU). Among them, the CU may implement part of the functions of the network device, and the DU may implement part of the functions of the network device. For example, the CU is responsible for processing non-real-time protocols and services, implementing the functions of the Radio Resource Control (RRC) layer, the Service Data Adaptation Protocol (SDAP) layer, and the Packet Data Convergence Protocol (PDCP) layer. The DU is responsible for processing physical layer protocols and real-time services, implementing the functions of the Radio Link Control (RLC) layer, the Medium Access Control (MAC) layer and the physical (PHY) layer. In addition, the AAU implements part of the physical layer processing functions, radio frequency processing and related functions of active antennas. Since the information of the RRC layer will eventually become the information of the PHY layer, or be converted from the information of the PHY layer, in this network deployment, high-layer signaling (RRC) can be considered to be sent by the DU, or sent by the DU and the AAU. It can be understood that the network devices 21, 22 may include at least one of a CU, a DU, and an AAU.

The functions of the core network devices 31, 32 are mainly to provide user connection, manage users, and bear services, and serve as a bearer network to provide an interface to an external network. For example, the core network device in a 5G NR system may include an Access and Mobility Management Function (AMF) entity, a User Plane Function (UPF) entity, a Session Management Function (SMF) entity, and other devices.

In the example shown in FIG. 1, the access network devices 21 and 22 communicate with the core network devices 31 and 32 via a respective interface, for example, an NG interface in a 5G NR system. The access network devices 21 and 22 communicate with the terminal devices 11 and 12 via an air interface, for example, a Uu interface.

The mobility management method according to embodiments of the present disclosure will be further described below with reference to the accompanying drawings. The mobility management method according to embodiments of the present disclosure may be performed solely or jointly by the terminal devices 11, 12 and the access network devices 21, 22 as shown in FIG. 1.

FIG. 2 is a flowchart illustrating a mobility management method according to an embodiment of the present disclosure. The method is performed, for example, by the terminal devices 11, 12 described with reference to FIG. 1. The method includes the following steps S201-S204.

In step S201, receiving a mobility management message.

In an embodiment of the present disclosure, the terminal device receives the mobility management message from the network device. Specifically, the terminal device receives the mobility management message delivered from the current serving gNB-CU. Specifically, the mobility management message at least includes measurement configuration information of one or more cells and execution condition information. Further, the mobility management message further includes channel state information report configuration information.

The one or more cells may include one or more current serving cells, serving cell groups, candidate cells and candidate cell groups. For example, in dual connectivity, the terminal device may access two cell groups, namely a Master Cell Group (MCG) and a Secondary Cell Group (SCG). In the MCG, there may be many cells, among which one cell used for initiating initial access is referred to as a Primary Cell (PCell). The MCG also includes Secondary Cells (SCells). Correspondingly, the SCG includes a Primary Secondary Cell (PSCell) and SCells. The PCell in the MCG and the SCell in the MCG are combined through Carrier Aggregation (CA). Similarly, the PSCell in the SCG and the SCell in the SCG are also combined through CA. In addition, as described above, the one or more cells may also be CUs and DUs of serving cells and/or candidate cells. The measurement configuration information of the one or more cells carries/includes mobility measurement configuration parameters thereof, such as a cell index, a CU index, a DU index, and a cell group index/list.

The channel state information report configuration information includes first channel state information report configuration information (CSI Report Configuration 1) and second channel state information report configuration information (CSI Report Configuration 2). The first channel state information report configuration information indicates that measurement reference signals are reference signals of a serving cell, and the second channel state information report configuration information indicates that the measurement reference signals are reference signals of a candidate cell.

The execution condition information is used to evaluate measurement results of the one or more cells, so as to determine whether to access one or more target cells among the one or more cells. The execution condition information includes measurement offset information corresponding to a plurality of cell types (such as PCell, PSCell, SCell). That is, while the number of candidate cells is not increased, the number of candidate cells of different types is increased.

In step S202, obtaining measurement information of the one or more cells based at least on the measurement configuration information. In some embodiments of the present disclosure, the measurement information may include a measured value of Reference Signal Received Power (RSRP), a measured value of Reference Signal Received Quality (RSRQ), a measured value of Signal to Interference plus Noise Ratio (SINR), channel quality, signal quality, etc.

In step S203, determining, based on the measurement information and the execution condition information, to access one or more target cells among the one or more cells.

In an embodiment of the present disclosure, the execution condition information includes first execution condition information related to layer 1 measurement and/or second execution condition information related to layer 3 measurement. One or more target cells among the one or more cells may be determined to be accessed based on the measurement information and the first execution condition information. That is, handover is directly determined to be performed according to the first execution condition information, i.e., accessing one or more target cells among the one or more cells.

In an exemplary embodiment of the present disclosure, the measurement information is, for example, a measured value of Reference Signal Received Power (RSRP). The first execution condition information may be at least one of the following first group of conditions, second group of conditions, or third group of conditions.

For example, the first group of conditions may be:
in the most recent N measurements, L1-RSRP(c) - L1-RSRP(s) ≥ Th1;
within a predetermined time period, L1-RSRP(c) - L1-RSRP(s) ≥ Th2;
wherein L1-RSRP(s) is a maximum L1-RSRP among L1-RSRPs of measurement reference signals when the measurement reference signals are reference signals of a serving cell, and L1-RSRP(c) is a maximum L1-RSRP among L1-RSRPs of the measurement reference signals when the measurement reference signals are reference signals of a candidate cell. Th1 and Th2 are predetermined threshold values, and Th1 and Th2 may be the same or different.

The first group of conditions indicates that the quality of the candidate cell is better than the quality of the current serving cell to a certain extent.

For example, the second group of conditions may be:
in the most recent N measurements, L1-RSRP(c) ≥ Th3;
within a predetermined time period, L1-RSRP(c) ≥ Th4.

The second group of conditions indicates that the quality of the candidate cell is better than a certain level.

For example, the third group of conditions may be:$L 1 - RSRP {\left(s\right)}_{t 1} - L 1 - RSRP {\left(s\right)}_{t 2} \geq Th 5 .$

The third group of conditions indicates a sharp degradation in the quality of the serving cell.

Alternatively, determining, based on the measurement information, the first execution condition information and the second execution condition information, to access one or more target cells among the one or more cells may include: when the measurement information satisfies the second execution condition information, determining whether the measurement information satisfies the first execution condition information, and determining to perform handover, i.e., accessing one or more target cells among the one or more cells, when the measurement information satisfies the first execution condition information. That is, the measurement information satisfying the second execution condition information is used as a prerequisite for determining whether the measurement information satisfies the first execution condition information.

In an exemplary embodiment of the present disclosure, the first execution condition information may be at least one of the first group of conditions, the second group of conditions, or the third group of conditions as described above. The second execution condition information may be any one of measurement events A3, A4, A5 or B1. For example, the measurement event A3 indicates that a quality of an intra-frequency candidate cell or an inter-frequency candidate cell is higher than a quality of a serving cell; A4 indicates that the quality of the inter-frequency candidate cell is higher than a certain threshold; A5 indicates that a quality of the serving cell is lower than a certain threshold and a quality of a candidate cell is higher than a certain threshold; B1 indicates that a quality of an inter-system candidate cell is higher than a certain threshold.

Alternatively, based on the measurement information, the first execution condition information and the second execution condition information, one or more target cells among the one or more cells are determined to be accessed. Further, determining, based on the measurement information, the first execution condition information and the second execution condition information, to access one or more target cells among the one or more cells may include: determining to access one or more target cells among the one or more cells when the measurement information satisfies the first execution condition information and the second execution condition information. That is, when both the first execution condition information and the second execution condition information are satisfied, handover is determined to be performed, i.e., accessing one or more target cells among the one or more cells.

In an exemplary embodiment of the present disclosure, the first execution condition information may be at least one of the first group of conditions, the second group of conditions, or the third group of conditions as described above, and the second execution condition information may be at least one of the measurement events A3, A4, A5 or B1 as described above.

In the above embodiments of the present disclosure, based on measurement information satisfying the second execution condition information, measurement associated with the first execution condition information and evaluation of the first execution condition information are triggered, thereby further ensuring the robustness of mobility handover.

In a further exemplary embodiment of the present disclosure, the execution condition information further includes measurement offset information corresponding to a plurality of cell types and/or cell events. When performing evaluation based on the measurement information and the execution condition information to perform handover, the measurement information, the measurement offset information and the threshold values in the above execution condition information are jointly used to perform the evaluation process.

For example, the same candidate cell may correspond to different types (i.e., one or more of PCell, PSCell, SCell), and different measurement offsets Offset_type1, Offset_type2 and Offset_type3 may be configured for different types. In addition, if a candidate cell already has Timing Advance (TA), that cell is preferentially selected; if the candidate cell has completed downlink synchronization, that cell is preferentially selected; if the candidate cell has completed Tracking Reference Signal (TRS) tracking, that cell is preferentially selected. For the above specific cell events, different measurement offsets Offset_event1, Offset_event2 and Offset_event3 may be configured.

For example, for a primary cell, the measurement result of the current serving primary cell is Mp, the type offset of the current serving primary cell is Offset_type1p, the event offset of the current serving primary cell is Offset_event1p, the measurement result of the candidate cell is Mn, the type offset of the candidate cell is Offset_type1n, and the event offset of the candidate cell is Offset_event2n. When Mn+Offset_type1n+Offset_event2n > Mp+Offset_type1p+Offset_event1p is satisfied, it is determined to hand over the serving primary cell to the candidate cell.

In step S204, accessing the one or more target cells based on a type and an index of the one or more target cells.

In an exemplary embodiment of the present disclosure, according to the determination result in step S203, i.e., the type (PCell, PSCell, or SCell) of the one or more target cells to be accessed, a configuration corresponding to the target cells is applied, so as to access the determined one or more target cells.

For example, if the CU index and the DU index in the execution condition information corresponding to the target cell are both consistent with those of the current serving cell, it is determined that the cell satisfying the condition belongs to the serving DU, and intra-DU handover and/or intra-CU handover needs to be performed. In this case, the terminal device performs partial MAC reestablishment.

If the CU index in the execution condition corresponding to the target cell is consistent with that of the current serving cell, while the DU index is inconsistent with that of the current serving cell, it is determined that the cell satisfying the condition belongs to the serving CU, and inter-DU handover and intra-CU handover needs to be performed. In this case, the terminal device performs Radio Link Control (RLC) reset and partial or full MAC reestablishment.

If the CU index in the execution condition corresponding to the target cell is inconsistent with that of the current serving cell, it is determined that the target cell satisfying the condition does not belong to the serving CU, and inter-CU handover needs to be performed. In this case, RLC reset, partial or full MAC reestablishment, and Packet Data Convergence Protocol (PDCP) reset are performed.

With reference to FIG. 2, in the mobility management method provided in the present disclosure, a cell handover based on mobility management is triggered by a terminal device, thereby reducing handover latency and improving robustness. Without increasing a number of candidate cells, the number of candidate cells of different types is increased, and more accurate cell type matching is achieved without increasing signaling overhead. In addition, for specific cell types and cell events, corresponding measurement offsets are configured, thereby further optimizing selection of a target cell.

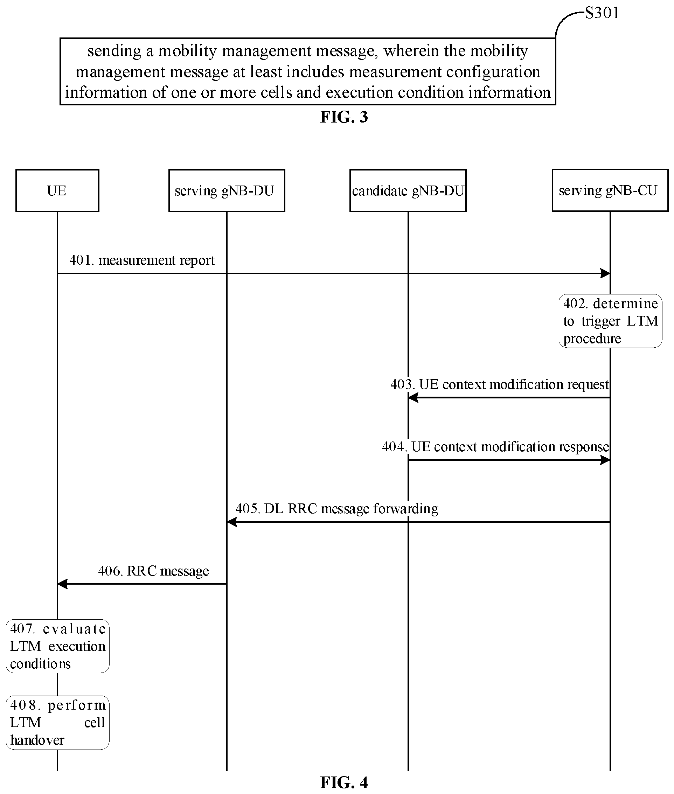

FIG. 3 is a flowchart further illustrating a mobility management method according to an embodiment of the present disclosure. The method is performed, for example, by the network devices 21 and 22 described with reference to FIG. 1. The method includes the following step S301.

In step S301, sending a mobility management message.

In an embodiment of the present disclosure, the network device sends the mobility management message to the terminal device. Specifically, the current serving gNB-CU delivers the mobility management message to the terminal device. Specifically, the mobility management message at least includes measurement configuration information of one or more cells and execution condition information. Further, the mobility management message further includes channel state information report configuration information.

The one or more cells may include one or more current serving cells, serving cell groups, candidate cells and candidate cell groups. For example, in dual connectivity, the terminal device may access two cell groups, namely a Master Cell Group (MCG) and a Secondary Cell Group (SCG). In the MCG, there may be many cells, among which one cell used for initiating initial access is referred to as a Primary Cell (PCell). The MCG also includes Secondary Cells (SCells). Correspondingly, the SCG includes a Primary Secondary Cell (PSCell) and SCells. The PCell in the MCG and the SCell in the MCG are combined through Carrier Aggregation (CA). Similarly, the PSCell in the SCG and the SCell in the SCG are also combined through CA. In addition, as described above, the one or more cells may also be CUs and DUs of serving cells and/or candidate cells. The measurement configuration information of the one or more cells carries/includes mobility measurement configuration parameters thereof, such as a cell index, a CU index, a DU index, and a cell group index/list.

The channel state information report configuration information includes first channel state information report configuration information (CSI Report Configuration 1) and second channel state information report configuration information (CSI Report Configuration 2). The first channel state information report configuration information indicates that measurement reference signals are reference signals of a serving cell, and the second channel state information report configuration information indicates that the measurement reference signals are reference signals of a candidate cell.

The execution condition information is used to evaluate measurement results of the one or more cells, so as to determine whether to access one or more target cells among the one or more cells. The execution condition information includes measurement offset information corresponding to a plurality of cell types (such as PCell, PSCell, SCell). That is, while the number of candidate cells is not increased, the number of candidate cells of different types is increased.

FIG. 4 is a schematic diagram illustrating an overall procedure of a mobility management method according to an embodiment of the present disclosure.

As shown in FIG. 4, in step 401, the UE (i.e., the terminal device) reports layer 3 measurement results to the current serving gNB-CU.

In step 402, the serving gNB-CU determines to trigger a Layer 1/Layer 2 Triggered Mobility (LTM) procedure.

In step 403, the serving gNB-CU sends a UE context modification request to the DU to which the candidate cell belongs, wherein the UE context modification request includes, for example, a candidate cell ID. Alternatively, in a case where the DU to which the candidate cell belongs is not a DU subordinate to the same CU, the UE context modification request is sent to another CU.

In step 404, the DU to which the candidate cell belongs sends a UE context modification response to the serving gNB-CU. The UE context modification response includes, for example, candidate cell related configuration, measurement configuration, etc.

In steps 405 and 406, the serving gNB-CU sends a Radio Resource Control (RRC) reconfiguration message to the UE via the serving gNB-DU. The RRC reconfiguration message includes, for example, the measurement configuration information and the execution condition information as described above with reference to FIG. 2 and FIG. 3.

In step S407, the UE evaluates LTM execution conditions. For example, the UE obtains measurement information of one or more cells based at least on measurement configuration information. The measurement information may include measurement values of reference signal received power (RSRP), reference signal received quality (RSRQ), signal-to-interference-plus-noise ratio (SINR), channel quality, signal quality, or the like. Further, based on the measurement information and the execution condition information, one or more target cells among the one or more cells are determined to be accessed. In embodiments of the present disclosure, the execution condition information includes first execution condition information related to Layer 1 measurements and/or second execution condition information related to Layer 3 measurements. One or more target cells among the one or more cells may be determined to be accessed based on the measurement information and the first execution condition information. That is, handover is directly determined to be performed according to the first execution condition information, i.e., accessing one or more target cells among the one or more cells. Alternatively, determining, based on the measurement information, the first execution condition information and the second execution condition information, to access one or more target cells among the one or more cells may include: when the measurement information satisfies the second execution condition information, determining whether the measurement information satisfies the first execution condition information, and determining to perform handover, i.e., accessing one or more target cells among the one or more cells, when the measurement information satisfies the first execution condition information. That is, the measurement information satisfying the second execution condition information is used as a prerequisite for determining whether the measurement information satisfies the first execution condition information. Alternatively, based on the measurement information, the first execution condition information and the second execution condition information, one or more target cells among the one or more cells are determined to be accessed. Further, determining, based on the measurement information, the first execution condition information and the second execution condition information, to access one or more target cells among the one or more cells may include: determining to access one or more target cells among the one or more cells when the measurement information satisfies the first execution condition information and the second execution condition information. That is, when both the first execution condition information and the second execution condition information are satisfied, handover is determined to be performed, i.e., accessing one or more target cells among the one or more cells. The first execution condition information and the second execution condition information are the same as those described above with reference to FIG. 2, and repeated descriptions thereof are omitted herein.

In step 408, the UE performs LTM cell handover. The one or more target cells are accessed based on a type and an index of the one or more target cells.

In an exemplary embodiment of the present disclosure, according to the determination result in step 407, i.e., the cell type (PCell, PSCell, SCell) of the one or more target cells to be accessed, the configuration corresponding to the target cells is applied, so as to access the determined one or more target cells.

For example, if the CU index and DU index in the execution condition information corresponding to the target cell are both consistent with those of the current serving cell, it is determined that the cell satisfying the condition belongs to the serving DU, and intra-DU handover and/or intra-CU handover needs to be performed. In this case, the terminal device performs partial MAC reestablishment.

If the CU index in the execution condition corresponding to the target cell is consistent with that of the current serving cell, while the DU index is inconsistent with that of the current serving cell, it is determined that the cell satisfying the condition belongs to the serving CU, and inter-DU handover and intra-CU handover needs to be performed. In this case, the terminal device performs Radio Link Control (RLC) reset and partial or full MAC reestablishment.

If the CU index in the execution condition corresponding to the target cell is inconsistent with that of the current serving cell, it is determined that the target cell satisfying the condition does not belong to the serving CU, and inter-CU handover needs to be performed. In this case, RLC reset, partial or full MAC reestablishment, and Packet Data Convergence Protocol (PDCP) reset are performed.

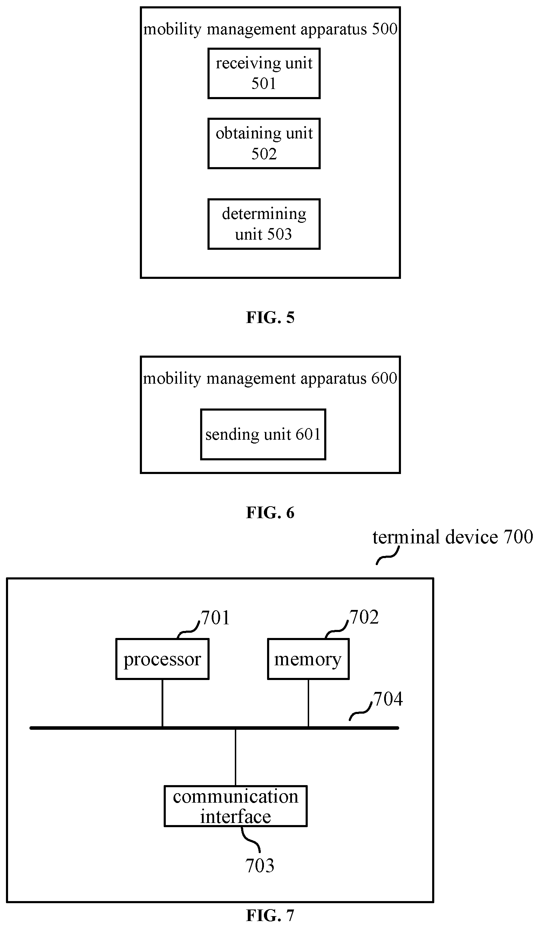

FIG. 5 is a block diagram illustrating a mobility management apparatus according to an embodiment of the present disclosure. The mobility management apparatus 500 shown in FIG. 5 is capable of implementing the mobility management method as described above. The mobility management apparatus 500 may be implemented in various manners by hardware alone, software alone, or a combination thereof, and the present disclosure is not limited thereto. The mobility management apparatus 500 according to an embodiment of the present disclosure may be deployed in the terminal devices 11, 12 as described above, or alternatively, the mobility management apparatus 500 may be the terminal devices 11, 12 as described above.

As shown in FIG. 5, the mobility management apparatus 500 includes a receiving unit 501, an obtaining unit 502, and a determining unit 503.

The receiving unit 501 is configured to receive a mobility management message, wherein the mobility management message at least includes measurement configuration information of one or more cells and execution condition information.

The obtaining unit 502 is configured to obtain measurement information of the one or more cells based at least on the measurement configuration information.

The determining unit 503 is configured to determine, based on the measurement information and the execution condition information, to access one or more target cells among the one or more cells.

In some embodiments, the execution condition information includes at least one of first execution condition information related to layer 1 measurement or second execution condition information related to layer 3 measurement. The determining unit 503 is configured to perform at least one of: determining, based on the measurement information and the first execution condition information, to access the one or more target cells among the one or more cells; or determining, based on the measurement information, the first execution condition information and the second execution condition information, to access the one or more target cells among the one or more cells.

More specifically, in the case of determining, based on the measurement information, the first execution condition information and the second execution condition information, to access the one or more target cells among the one or more cells, the determining unit 503 is configured to perform at least one of: in response to the measurement information satisfying the first execution condition information and the second execution condition information, determining to access the one or more target cells among the one or more cells; or in response to the measurement information satisfying the second execution condition information, determining whether the measurement information satisfies the first execution condition information, and in response to the measurement information satisfying the first execution condition information, determining to access the one or more target cells among the one or more cells.

In some embodiments, the execution condition information includes a plurality of pieces of execution condition information corresponding to a plurality of cell types, the plurality of cell types includes a primary cell, a primary secondary cell and a secondary cell, and the execution condition information further includes measurement offset information corresponding to the plurality of cell types.

In addition, the mobility management apparatus 500 may further include an access unit (not shown) configured to access the one or more target cells based on a type and an index of the one or more target cells.

FIG. 6 is a block diagram further illustrating a mobility management apparatus according to an embodiment of the present disclosure. The mobility management apparatus 600 shown in FIG. 6 is capable of implementing the mobility management method as described above. The mobility management apparatus 600 may be implemented in various manners by hardware alone, software alone, or a combination thereof, and the present disclosure is not limited thereto. The mobility management apparatus 600 according to an embodiment of the present disclosure may be deployed in the network devices 21, 22 as described above, or alternatively, the mobility management apparatus 600 may be the network devices 21, 22 as described above.

As shown in FIG. 6, the mobility management apparatus 600 includes a sending unit 601.

The sending unit 601 is configured to send a mobility management message. The mobility management message at least includes measurement configuration information of one or more cells and execution condition information, wherein the measurement configuration information is used for a terminal device to obtain measurement information of the one or more cells and determine, based on the measurement information and the execution condition information, to access one or more target cells among the one or more cells.

FIG. 7 is a hardware block diagram illustrating a terminal device according to an embodiment of the present disclosure. A terminal device 700 includes a processor 701, a memory 702, and a communication interface 703. The processor 701, the memory 702, and the communication interface 703 are connected to each other through a bus 704.

The communication interface 703 is configured to perform wireless communication with a network device, and the communication interface 703 may be a communication chip.

The memory 702 is configured to store computer-readable instructions, and the memory 702 may be implemented by any type of volatile or non-volatile storage device or a combination thereof. The volatile memory may include, for example, a random access memory (RAM) and/or a cache memory, etc. The non-volatile memory may include, for example, a read-only memory (ROM), a hard disk, a flash memory, an optical disk, a magnetic disk, etc.

The processor 701 is configured to execute the computer-readable instructions, to cause the terminal device 700 to perform the mobility management method as described above.

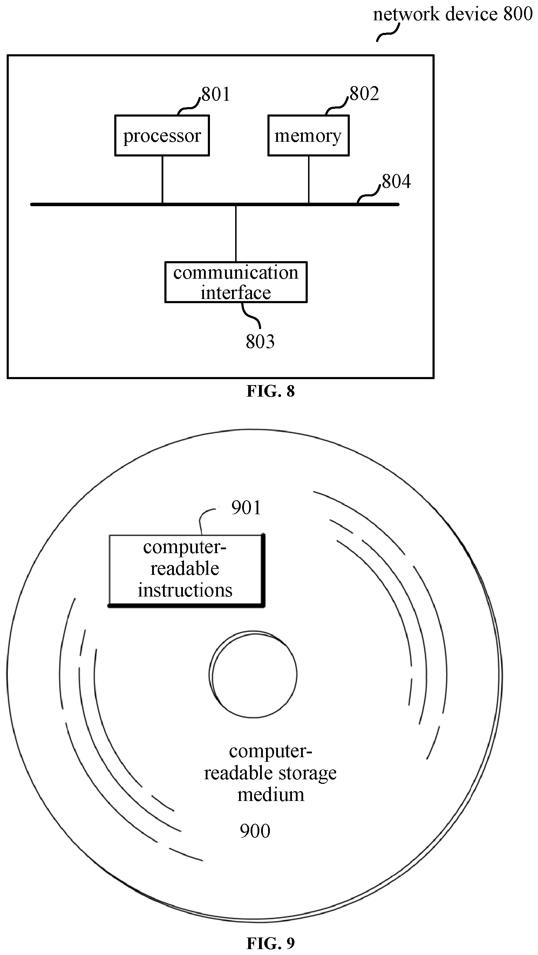

FIG. 8 is a hardware block diagram illustrating a network device according to an embodiment of the present disclosure. A network device 800 includes a processor 801, a memory 802, and a communication interface 803. The processor 801, the memory 802, and the communication interface 803 are connected to each other through a bus 804.

The communication interface 803 is configured to perform wireless communication with a terminal device, and the communication interface 803 may be a communication chip.

The memory 802 is configured to store computer-readable instructions, and the memory 802 may be implemented by any type of volatile or non-volatile storage device or a combination thereof. The volatile memory may include, for example, a random access memory (RAM) and/or a cache memory, etc. The non-volatile memory may include, for example, a read-only memory (ROM), a hard disk, a flash memory, an optical disk, a magnetic disk, etc.

The processor 801 is configured to execute the computer-readable instructions, to cause the network device 800 to perform the mobility management method as described above.

FIG. 9 is a schematic diagram illustrating a computer-readable storage medium according to an embodiment of the present disclosure. As shown in FIG. 9, the computer-readable storage medium 900 according to the embodiment of the present disclosure stores computer-readable instructions 901 thereon. When the computer-readable instructions 901 are executed by a processor, the mobility management method described above with reference to the accompanying drawings is performed. The computer-readable storage medium includes, but is not limited to, for example, a volatile memory and/or a non-volatile memory. The volatile memory may include, for example, a RAM and/or a cache. The non-volatile memory may include, for example, a ROM, a hard disk, a flash memory, an optical disk, a magnetic disk, or the like.

The mobility management method and apparatus, terminal device, network device, and storage medium according to embodiments of the present disclosure have been described with reference to the accompanying drawings. According to the mobility management method provided in the embodiments of the present disclosure, a cell handover based on mobility management is triggered by a terminal device, thereby reducing handover latency and improving robustness. Without increasing a number of candidate cells, the number of candidate cells of different types is increased, and more accurate cell type matching is achieved without increasing signaling overhead. In addition, for specific cell types and cell events, corresponding measurement offsets are configured, thereby further optimizing selection of a target cell.

Those of ordinary skill in the art will appreciate that the units and algorithm steps of the various examples described in connection with the embodiments disclosed herein can be implemented in electronic hardware, or a combination of computer software and electronic hardware. Whether these functions are performed in hardware or software depends on the specific application and design constraints of the technical solution. A person skilled in the art may use different methods to implement the described functions for each specific application, but such implementation should not be considered to be beyond the scope of the present disclosure.

The basic principles of the present disclosure have been described above in conjunction with specific embodiments. However, it should be noted that the advantages, benefits, effects, etc. mentioned in the present disclosure are merely exemplary and not limiting, and it should not be considered that these advantages, benefits, effects, etc. are necessarily possessed by the respective embodiments of the present disclosure. In addition, the specific details disclosed above are only for the purpose of illustration and for ease of understanding, and are not restrictive, and the above details do not limit the present disclosure to necessarily adopting the above specific details for implementation.

The block diagrams of devices, apparatuses, equipment, and systems involved in the present disclosure are only illustrative examples and are not intended to require or imply that the connections, arrangements, and configurations must be made in the manner shown in the block diagrams. As those skilled in the art will recognize, these devices, apparatuses, equipment, and systems may be connected, arranged, and configured in any manner. Words such as "include", "comprise", "have", etc. are open-ended words meaning "including but not limited to" and are used interchangeably therewith. The words "or" and "and" used herein refer to the word "and/or" and are used interchangeably therewith unless the context clearly indicates otherwise. The word "such as" used herein refers to the phrase "such as but not limited to" and is used interchangeably therewith.

In addition, as used herein, "or" used in a list of items beginning with "at least one" indicates a disjunctive list, such that for example a list of "at least one of A, B or C" means A or B or C, or AB or AC or BC, or ABC (i.e., A and B and C). In addition, the wording "exemplary" does not mean that the described example is preferred or better than other examples.

It should further be noted that, in the systems and methods of the present disclosure, the various components or steps may be decomposed and/or recombined. Such decomposition and/or recombination should be regarded as equivalent solutions of the present disclosure.

Various changes, substitutions, and alterations can be made to the techniques described herein without departing from the teachings defined by the appended claims. In addition, the scope of the claims of the present disclosure is not limited to the specific aspects of the processes, machines, manufactures, compositions of events, means, methods and actions described above. The presently known or later to be developed processes, machines, manufactures, compositions of events, means, methods or actions that perform substantially the same functions or achieve substantially the same results as the corresponding aspects described herein may be utilized. Accordingly, the appended claims include within their scope such processes, machines, manufactures, compositions of events, means, methods or actions.

The above description of the disclosed aspects is provided to enable any person skilled in the art to make or use the present disclosure. Various modifications to these aspects will be readily apparent to those skilled in the art, and the generic principles defined herein may be applied to other aspects without departing from the scope of the present disclosure. Accordingly, the present disclosure is not intended to be limited to the aspects shown herein, but is to be accorded the widest scope consistent with the principles and novel features disclosed herein.

The foregoing description has been presented for purposes of illustration and description. Furthermore, this description is not intended to limit the embodiments of the present disclosure to the form disclosed herein. Although a number of example aspects and embodiments have been discussed above, those skilled in the art will recognize certain variations, modifications, changes, additions and sub-combinations of these aspects and embodiments.

## Claims

1. A mobility management method, performed by a terminal device, comprising:
receiving a mobility management message, wherein the mobility management message at least comprises measurement configuration information of one or more cells and execution condition information;
obtaining measurement information of the one or more cells based at least on the measurement configuration information; and
determining, based on the measurement information and the execution condition information, to access one or more target cells among the one or more cells.

2. The mobility management method according to claim 1, wherein the execution condition information comprises at least one of first execution condition information related to layer 1 measurement or second execution condition information related to layer 3 measurement,
wherein the determining, based on the measurement information and the execution condition information, to access the one or more target cells among the one or more cells comprises at least one of:
determining, based on the measurement information and the first execution condition information, to access the one or more target cells among the one or more cells; or
determining, based on the measurement information, the first execution condition information and the second execution condition information, to access the one or more target cells among the one or more cells.

3. The mobility management method according to claim 2, wherein the determining, based on the measurement information, the first execution condition information and the second execution condition information, to access the one or more target cells among the one or more cells comprises at least one of:
in response to the measurement information satisfying the first execution condition information and the second execution condition information, determining to access the one or more target cells among the one or more cells; or
in response to the measurement information satisfying the second execution condition information, determining whether the measurement information satisfies the first execution condition information, and in response to the measurement information satisfying the first execution condition information, determining to access the one or more target cells among the one or more cells.

4. The mobility management method according to any one of claims 1 to 3, wherein the execution condition information comprises a plurality of pieces of execution condition information corresponding to a plurality of cell types,
the plurality of cell types comprises a primary cell, a primary secondary cell and a secondary cell, and the execution condition information further comprises measurement offset information corresponding to the plurality of cell types.

5. The mobility management method according to any one of claims 1 to 3, further comprising:
accessing the one or more target cells based on a type and an index of the one or more target cells.

6. The mobility management method according to claim 2 or 3, wherein the first execution condition information comprises at least one of a first group of conditions, a second group of conditions or a third group of conditions,
the first group of conditions comprises: L1-RSRP(c) - L1-RSRP(s) ≥ Th1 in the most recent N measurements, and L1-RSRP(c) - L1-RSRP(s) ≥ Th2 within a predetermined time period,
the second group of conditions comprises: L1-RSRP(c) ≥ Th3 in the most recent N measurements, and L1-RSRP(c) ≥ Th4 within a predetermined time period,
the third group of conditions comprises: L1-RSRP(s)ₜ₁ - L1-RSRP(s)ₜ₂ ≥ Th5,
wherein L1-RSRP(s) is a maximum L1-RSRP among a plurality of L1-RSRPs corresponding to a plurality of measurement reference signals when the measurement reference signals are reference signals of a serving cell, L1-RSRP(c) is a maximum L1-RSRP among the plurality of L1-RSRPs corresponding to the plurality of measurement reference signals when the measurement reference signals are reference signals of a candidate cell, and Th1 to Th5 are predetermined thresholds.

7. The mobility management method according to claim 2 or 3, wherein the second execution condition information is any one of measurement events A3, A4, A5 or B1,
the measurement event A3 indicates that a quality of an intra-frequency candidate cell or an inter-frequency candidate cell is higher than a quality of a serving cell,
the measurement event A4 indicates that the quality of the inter-frequency candidate cell is higher than a first threshold,
the measurement event A5 indicates that a quality of the serving cell is lower than a second threshold and a quality of a candidate cell is higher than a third threshold, and
the measurement event B1 indicates that a quality of an inter-system candidate cell is higher than a fourth threshold.

8. A mobility management method, performed by a network device, comprising:
sending a mobility management message, wherein the mobility management message at least comprises measurement configuration information of one or more cells and execution condition information, wherein the measurement configuration information is used for a terminal device to obtain measurement information of the one or more cells and determine, based on the measurement information and the execution condition information, to access one or more target cells among the one or more cells.

9. The mobility management method according to claim 8, wherein the execution condition information comprises at least one of first execution condition information related to layer 1 measurement or second execution condition information related to layer 3 measurement.

10. The mobility management method according to claim 8 or 9, wherein the execution condition information comprises a plurality of pieces of execution condition information corresponding to a plurality of cell types,
the plurality of cell types comprises a primary cell, a primary secondary cell and a secondary cell, and the execution condition information further comprises measurement offset information corresponding to the plurality of cell types.

11. A mobility management apparatus, comprising:
a receiving unit configured to receive a mobility management message, wherein the mobility management message at least comprises measurement configuration information of one or more cells and execution condition information;
an obtaining unit configured to obtain measurement information of the one or more cells based at least on the measurement configuration information; and
a determining unit configured to determine, based on the measurement information and the execution condition information, to access one or more target cells among the one or more cells.

12. A mobility management apparatus, comprising:
a sending unit configured to send a mobility management message, wherein the mobility management message at least comprises measurement configuration information of one or more cells and execution condition information, wherein the measurement configuration information is used for a terminal device to obtain measurement information of the one or more cells and determine, based on the measurement information and the execution condition information, to access one or more target cells among the one or more cells.

13. A terminal device, comprising:
a communication interface configured to perform wireless communication with a network device;
a memory configured to store computer-readable instructions; and
a processor configured to execute the computer-readable instructions, to cause the terminal device to perform the mobility management method according to any one of claims 1 to 7.

14. A network device, comprising:
a communication interface configured to perform wireless communication with a terminal device;
a memory configured to store computer-readable instructions; and
a processor configured to execute the computer-readable instructions, to cause the network device to perform the mobility management method according to any one of claims 8 to 10.

15. A non-transitory computer-readable storage medium for storing computer-readable instructions, wherein when the computer-readable instructions are executed by a processor, the computer-readable instructions cause the processor to perform the mobility management method according to any one of claims 1 to 7.
